# EUROPÄISCHE PATENTSCHRIFT

(11) **EP 1 037 772 B1**
(45) Veröffentlichungstag und Bekanntmachung des Hinweises auf die Patenterteilung: **07.09.2005**
(21) Anmeldenummer: 98966567.4
(22) Anmeldetag: 14.12.1998
(51) Int. Cl.: B60R 21/22

(54) **GASSACK FÜR EIN AIRBAGMODUL**
AIR BAG FOR AN AIRBAG UNIT
COUSSIN GONFLABLE POUR MODULE D'AIRBAG

(30) Priorität: 15.12.1997 DE 19757410
(43) Veröffentlichungstag der Anmeldung: 27.09.2000
(73) Patentinhaber: Takata-Petri AG, 63743 Aschaffenburg (DE)
(72) Erfinder: ECKERT, Nick, D-12587 Berlin (DE); HAASE, Carsten, D-10965 Berlin (DE); SCHLÖNVOIGT, Jens, D-13187 Berlin (DE)
(74) Vertreter: Baumgärtel, Gunnar
(86) Internationale Anmeldenummer: PCT/DE1998/003762
(87) Internationale Veröffentlichungsnummer: WO 1999/030933

(56) Entgegenhaltungen:
- WO-A-93/16902
- DE-A- 3 833 889
- DE-A- 4 304 152

## Beschreibung

Die Erfindung betrifft einen Gassack für ein Airbagmodul.

Um Gassäcke unterschiedlichen Anforderungen, z.B. als Fahrer- Beifahrer- oder Seitenairbags, anzupassen, ist es bekannt, den Gassäcken unterschiedliche Formen zu geben. Während ein Fahrerairbag im allgemeinen eine symmetrische Form aufweist, sind für Beifahrerairbags asymmetrische Formen und für Seitenairbags flache asymmetrische Formen bekannt. So ist aus der DE 195 41 513 A1 ein Seitenairbag bekannt, der eine C-förmige Kontur aufweist. Dadurch wird die Rückhaltefunktion des Airbags bereichsweise auf bestimmte Körperteile beschränkt, deren Abstützung im Crashfall wesentlich ist.

Weiterhin ist aus der DE 44 34 036 A1 ein Seitenairbag mit einem Gassack bekannt, der eine obere und untere Gaskammer aufweist, wobei die obere größer als die untere ist, so daß bei einem Seitenaufprall der Thorax- und der Kopfbereich gleichmäßig abgefangen werden.

Schließlich ist aus der DE 195 46 143 A1 eine Fahrzeuginsassen-Rückhalteeinrichtung bekannt, bei der eine als Seitenbag wirksame elastische Blase den Umriß einer Tür mit Fensterausschnitt aufweist. Bei dieser Ausführung ist also innerhalb der Außenkontur des Seitenbags ein Ausschnitt an einer Stelle vorhanden, an der der Airbag unerwünscht ist.

Die genannten Gassäcke weisen den Nachteil auf, daß sie im aufgeblasenen Zustand durch ihre Anbindung an den Gasgenerator in ihren Freiheitsgraden festgelegt sind. Das kann sich in bestimmten Einbaulagen eines Airbagmoduls trotz der angepaßten Form der bekannten Gassäcke negativ auf die Insassenkinematik auswirken. Z.B. können aus diesem Grund Gassäcke nicht am Fahrzeugdach angebaut werden. Wenn der aufgeblasene Gassack aufgrund seiner eingeschränkten Freiheitsgrade den Bewegungsablauf des Insassen nicht begleiten kann, kommt es zu Relativbewegungen zwischen Gassackgewebe und dem Insassen. Die Folge sind Hautabschürfungen und zu hohe Belastungen verschiedener Körperteile. Z.B. kann es zu einer tödlichen Nackenextension kommen. WO 93 16 902 offenbart als nächsten Stand der Technik einen Gassack gemäß dem Oberbegriff des Anspruchs 1.

Der Erfindung liegt die Aufgabe zugrunde, den Gassack so zu verändern, daß er nach seiner Entfaltung den Bewegungsablauf des Insassen begleiten kann.

Erfindungsgemäß wird das gemäß den Merkmalen des Anspruchs 1 erreicht.

Der erfindungsgemäße Gassack für ein Airbagmodul weist mindestens einen freigeschnittenen, unabhängig vom übrigen Gassackbereich beweglichen Gassackabschnitt auf, der zumindest teilweise innerhalb der Außenkontur des Gassacks liegt. Dieser Gassack stellt also im aufgeblasenen Zustand keinen in sich geschlossenen Körper dar, sondern er weist mindestens einen Abschnitt auf, der freigeschnitten ist und unabhängig vom übrigen Gassack beweglich ist. Damit kann dieser Abschnitt die Bewegungen des Insassen im Crashfall begleiten, wodurch Relativbewegungen zwischen diesem Abschnitt des Gassacks und dem Insassen weitestgehend vermieden werden.

Der freigeschnittene Gassackabschnitt weist eine solche Größe und Form auf, daß der benachbarte Gassackabschnitt für den freigeschnittenen Gassackabschnitt einen Rahmen darstellt. Da sich der freigeschnittene Gassackabschnitt unabhängig bewegen kann, kann er durch den Insassen partiell aus diesen Rahmen gedrückt werden.

In einer ersten Ausführungsform ist der freigeschnittene Gassackabschnitt in dem Gassackbereich vorgesehen, der im entfalteten Gassack dem Kopf des Insassen zugeordnet ist.

Diese Ausführungsform ist insbesondere für einen Gassack zweckmäßig, der sich vom Fahrzeugdach her entfaltet. Prallt der Kopf des Insassen auf den freigeschnittenen Abschnitt des Gassacks, dann kann dieser Abschnitt der Bewegung des Kopfes folgen, wodurch eine Relativbewegung zwischen beiden vermieden wird.

In einer zweiten Ausführungsform liegt der freigeschnittene Gassackabschnitt im Bereich der Anbindung des Gassacks an einen Gasgenerator. Bei dieser Ausführungsform ist der freigeschnittene Abschnitt des Gassacks mit dem Gasgenerator verbunden. Hierdurch kann sich insbesondere der übrige Bereich des Gassacks dem Insassen besser anpassen.

In einer Ausführungsform verläuft mindestens ein Freischnitt schlitzförmig durch gegenüberliegende Seiten des Gassacks und gegenüberliegende Schlitzkanten dieser Seiten sind miteinander gasdicht verbunden. Bei dieser Ausführungsform werden die gegenüberliegenden Schlitzkanten der gegenüberliegenden Seiten unmittelbar miteinander verbunden, wodurch der entfaltete Gassack an den Schlitzkanten eine eingeschnürte Außenkontur aufweist. Es ist aber auch möglich, daß zwischen den gegenüberliegenden Schlitzkanten der gegenüberliegenden Seiten mindestens ein zusätzliches Gassackteil und insbesondere solcher Breite vorgesehen ist, daß der Gassack im entfalteten Zustand auch im Bereich des Schlitzes den Verlauf der Außenkontur eines ungeschlitzten Gassacks aufweist.

Es ist zweckmäßig, daß der Gassack aus einem Ober- und einem Unterteil zusammengesetzt ist, und daß beide Teile einen identischen Schlitzverlauf aufweisen.

Der Schlitz kann in Abhängigkeit der Erfordernisse einen unterschiedlichen Verlauf haben. Vorzugsweise verläuft der Schlitz kurven- oder winkelförmig und insbesondere U-förmig.

In einer Ausführungsform liegen beide Enden des Schlitzes innerhalb der Gassackaußenkontur. In einer weiteren Ausgestaltung dieser Ausführungsform liegen zwei Schlitze mit ihren Enden im Abstand einander gegenüber.

In einer weiteren Ausführungsform durchdringt mindestens ein Ende des Schlitzes die Gassackaußenkontur, so daß beim Wegbewegen des freigeschnittenen Gassackabschnitts die Außenkontur des Gassacks an dieser Stelle mit wegbewegt wird.

Es ist zweckmäßig, daß der Verlauf des Schlitzes zumindest teilweise dem Verlauf der Außenkontur des Gassacks entspricht.

Die Erfindung soll in Ausführungsbeispielen anhand von Zeichnungen erläutert werden. Es zeigen:
- Fig. 1: einen am Fahrzeugdach befestigten Gassack bekannter Bauart nach seiner Entfaltung,
- Fig. 2: den Gassack nach Fig. 1 nach dem Aufprall des Insassen,
- Fig. 3: die Draufsicht auf einen nicht entfalteten Gassack mit einem U-förmig freigeschnittenen Gassackabschnitt,
- Fig. 4: den Gassack nach Fig.3 in der Seitenansicht in entfalteter Lage,
- Fig. 5: einen Gassack nach den Figuren 3 und 4 für den Schutz des Kopfbereichs nach dem Aufprall des Insassen,
- Fig. 6: die Anwendung des Gassacks nach den Figuren 3 und 4 mit einer Anbindung an den Gasgenerator unterhalb der Armaturentafel,
- Fig. 7-13: unterschiedliche Formen der freigeschnittenen Gassackabschnitte,
- Fig. 14: einen Schnitt durch einen Gassack, bei dem die gegenüberliegenden Freischnittkanten der gegenüberliegenden Seiten des Gassacks unmittelbar miteinander verbunden sind,
- Fig. 15: einen Schnitt durch einen Gassack, bei dem zwischen den gegenüberliegenden Freischnittkanten der gegenüberliegenden Seiten des Gassacks ein zusätzliches Gassackteil vorgesehen ist.

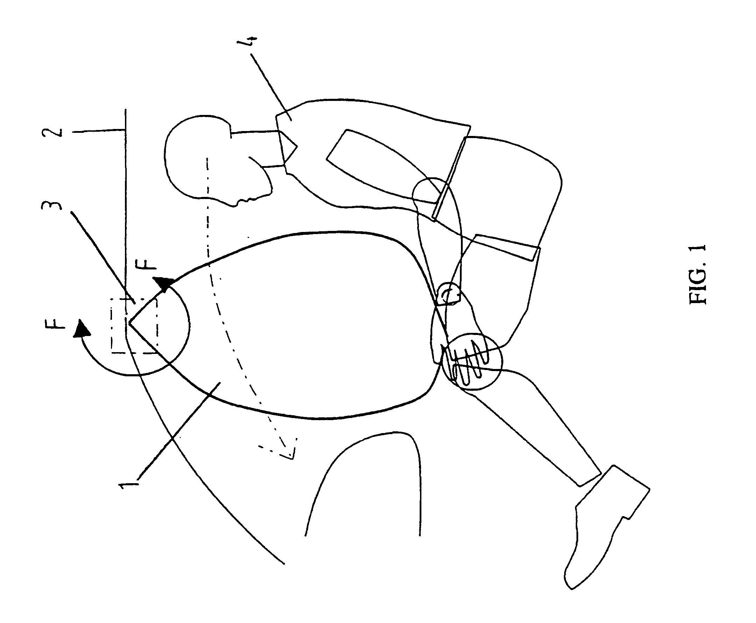

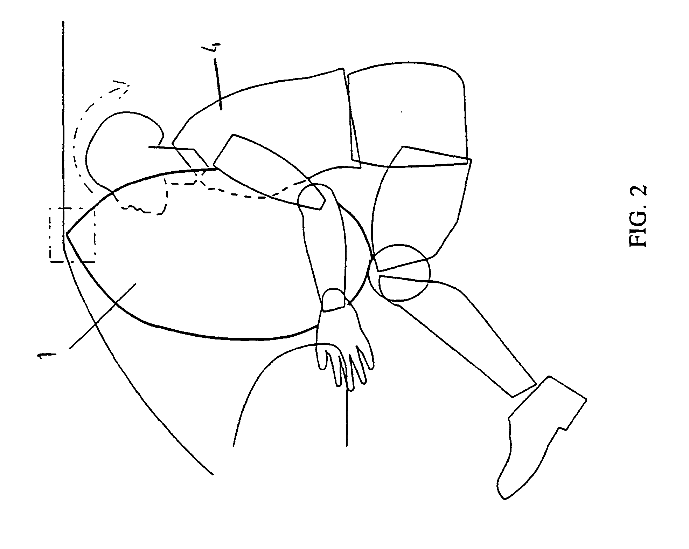

In der Fig. 1 ist ein Gassack 1 herkömmlicher Bauart an einem Fahrzeugdach 2 vorgesehen. Im dargestellten entfalteten Zustand erstreckt sich der Gassack ausgehend von einem Gasgenerator 3 nach unten. Durch seine Anbindung an den Gasgenerator hat er die durch Pfeile F erkennbaren Freiheitsgrade. Wie aus der Fig. 2 ersichtlich ist, prallt der Insasse 4 im Crashfall auf den entfalteten Gassack 1. Da dieser sich dabei nur geringfügig in Fahrtrichtung bewegen kann, dringt der Insasse in den Gassack ein, wie es aus der Fig. 2 ersichtlich ist. Anschließend wird aber insbesondere der Kopf wegen der auftretenden Reaktionskräfte wieder nach hinten geschleudert, was durch den strichpunktierten Pfeil oberhalb des Kopfes verdeutlicht wird, so daß es zu einer tödlichen Nackenextension kommen kann.

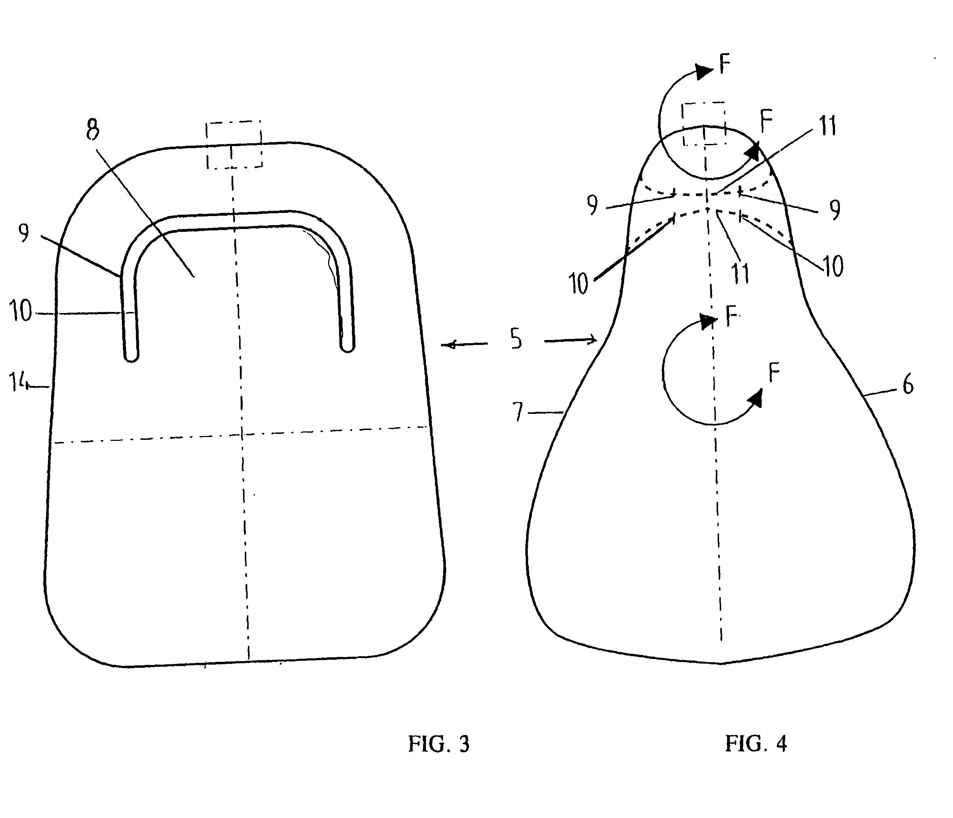

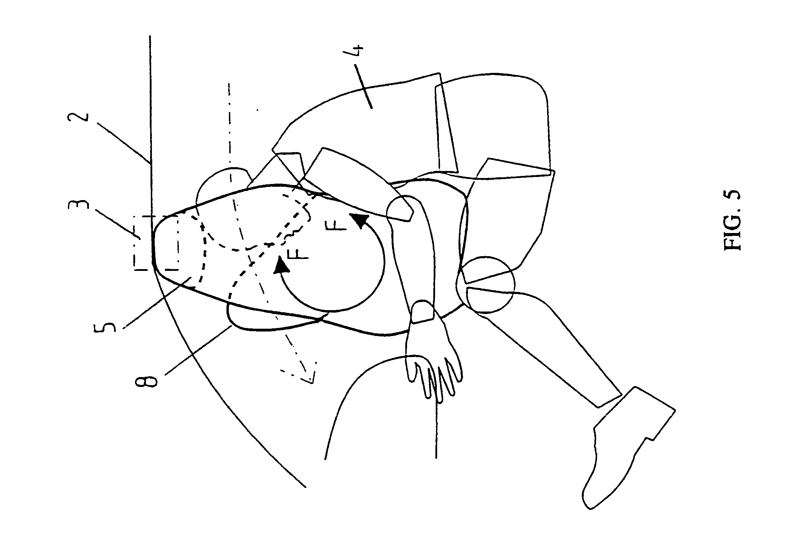

In den Figuren 3 und 4 ist ein erfindungsgemäßer Gassack 5 dargestellt. Dieser besteht aus einer Oberplatte 6 und einer Unterplatte 7. In beiden ist ein freigeschnittener Abschnitt 8 vorhanden, wobei die Schnittkanten 9, 10 beider Platten übereinanderliegen. Wie aus der Fig. 4 ersichtlich ist, sind die gegenüberliegenden Schnittkanten 9 bzw. 10 der gegenüberliegenden Ober- und Unterplatte unter Einfügung eines zusätzlichen Gassackteils 11 miteinander verbunden. Durch die Pfeile F soll verdeutlicht werden, daß sich der freigeschnittene Abschnitt 8 und der übrige Bereich des Gassacks getrennt voneinander bewegen können.

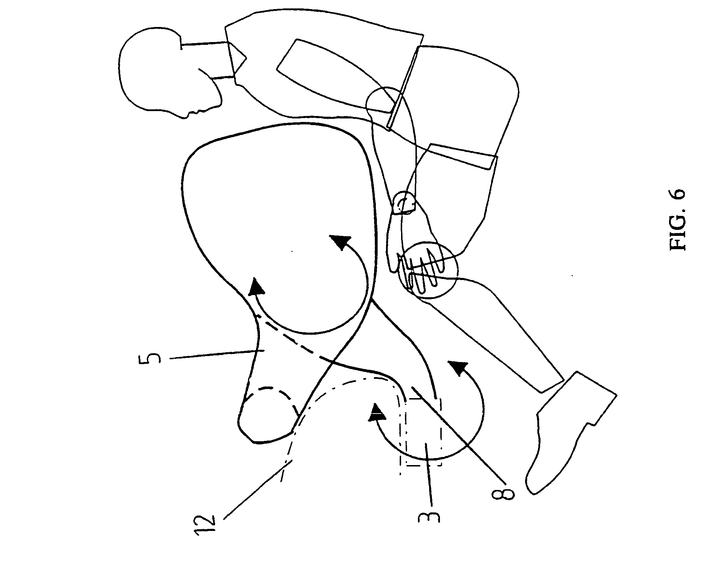

In der Fig. 5 ist die Wirkungsweise des erfindungsgemäßen Gassacks der Figuren 3 und 4 im Crashfall dargestellt. Der Gassack 5 ist am Fahrzeugdach 2 befestigt und entfaltet sich ausgehend vom Gasgenerator 3 nach unten. Der freigeschnittene Gassackabschnitt 8 ist in der dargestellten Ausführungsform im Kopfbereich des Insassen 4 vorgesehen. Im Crashfall prallt der Kopf deshalb auf diesen Abschnitt. Wie aus der Fig. 5 erkennbar ist, wird dieser dabei nach vorn bewegt, d.h., er bewegt sich in gleicher Richtung wie der Kopf. Relativbewegungen zwischen dem Kopf und diesem Abschnitt werden deshalb zumindest verringert, so daß Hautabschürfungen und insbesondere tödliche Nackenextensionen vermieden werden. Der erfindungsgemäße Gassackaufbau ermöglicht damit erstmalig die Anbringung des Gassacks am Fahrzeugdach, ohne daß die Gefahr besteht, daß durch diese Anbringung der Insasse im Crashfall verletzt wird. Die Anbringung am Dach eröffnet die Möglichkeit, eine einzige Ausführung des Airbagmoduls für den Beifahrer- oder Fondsitz zu verwenden. Die bisher erforderliche Typenvielfalt kann entfallen.

Der erfindungsgemäße Gassack bringt aber auch für die heute bereits üblichen Anbindungen Vorteile. In der Fig. 6 ist eine Ausführungsform dargestellt, bei der der Gasgenerator 3 unterhalb der Instrumententafel 12 angebracht ist. In diesem Fall ist der freigeschnittene Abschnitt 8 mit dem Gasgenerator verbunden. Da dieser Abschnitt unabhängig vom übrigen Bereich des Gassacks 5 beweglich ist, kann sich, wie in der Fig. 6 dargestellt, der entfaltete Gassack auch in dieser Einbaulage wesentlich besser dem Insassen anpassen.

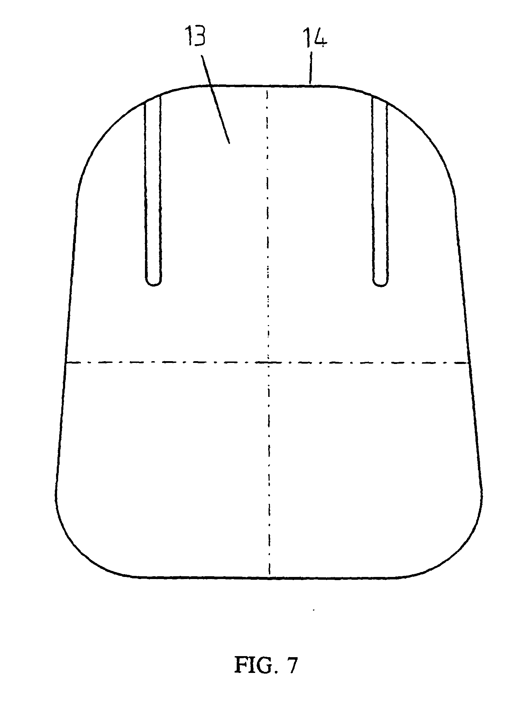

In den Figuren 7 bis 13 sind unterschiedliche Formen des freigeschnittenen Gassackabschnitts dargestellt. In der Fig. 7 ist ein freigeschnittener Abschnitt 13 dargestellt, der sich im Unterschied zur vorher dargestellten Ausführungsform bis an die Außenkontur 14 des Gassacks erstreckt, wobei die Schlitze die Außenkontur durchdringen.

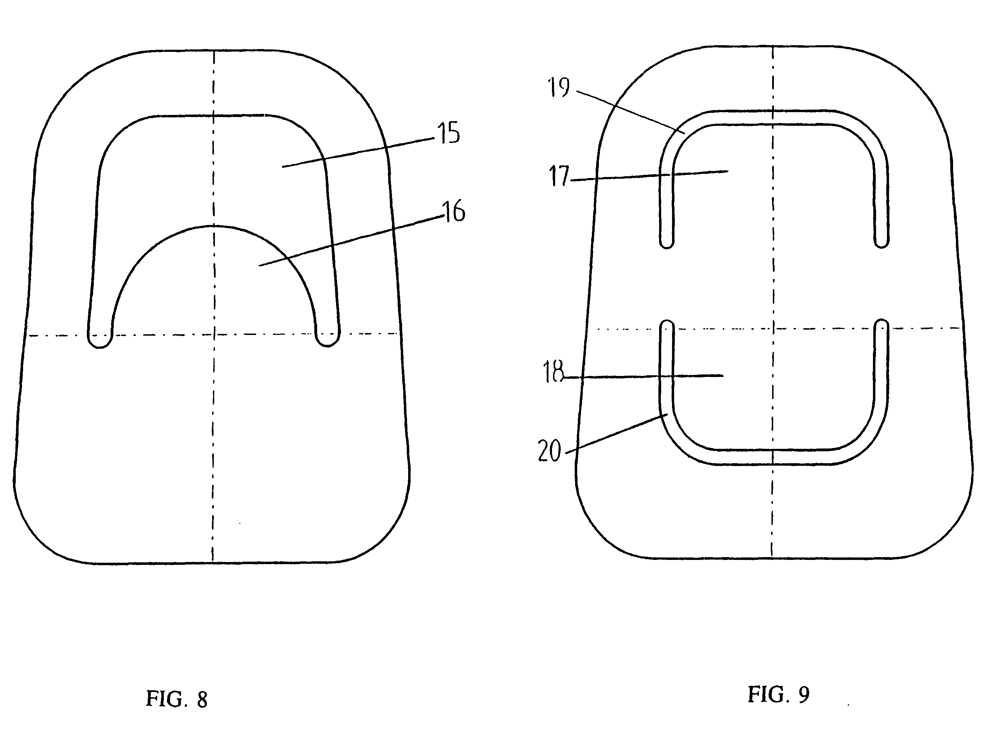

Bei der Ausführungsform der Fig. 8 ist ein größerer Freischnitt 15 vorhanden, so daß der freigeschnittene Abschnitt 16 gegenüber den vorherigen Ausführungsformen kleiner ist.

In der Ausführungsform der Fig. 9 liegen sich zwei freigeschnittene Abschnitte 17, 18 gegenüber. Beide Freischnitte sind durch U-förmige Schlitze 19 bzw. 20 erzeugt, die sich von der Mitte des Gassacks in Richtung gegenüberliegender Seiten erstrecken. In dieser Ausführungsform ist der Gassack noch anpassungsfähiger.

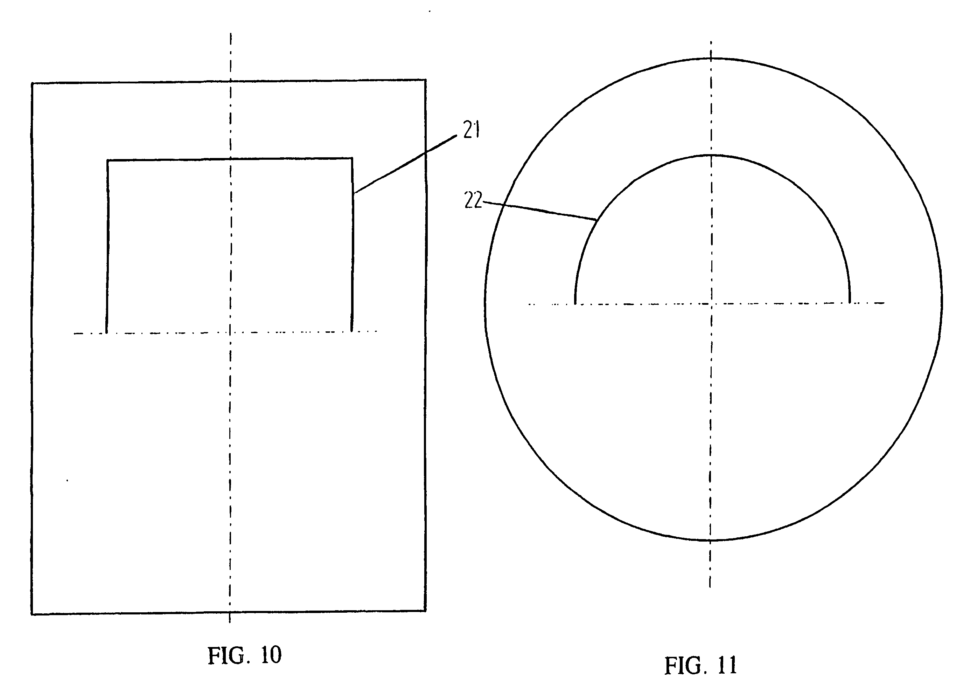

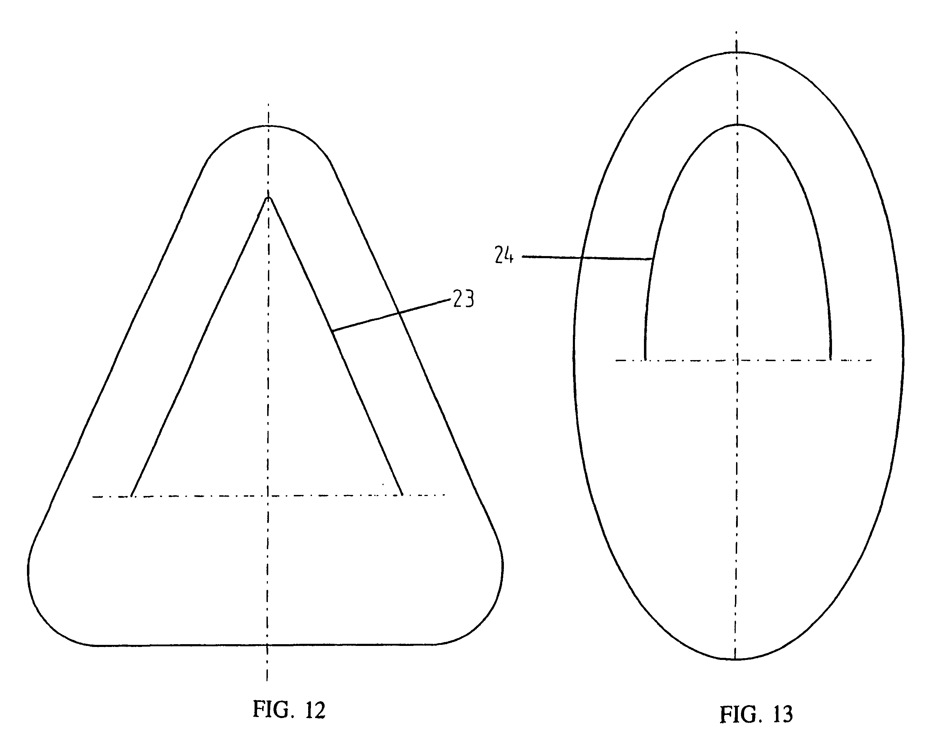

In den Figuren 10 - 13 sind unterschiedliche Schlitzformen zur Erzeugung des freigeschnittenen Abschnitts in Draufsichten auf den ausgebreiteten Gassack dargestellt. In der Fig. 10 ist ein rechteckförmiger Schlitz 21, in der Fig. 11 ein halbkreisförmiger Schlitz 22, in der Fig. 12 ein dreieckförmiger Schlitz 23 und in der Fig. 13 ein Schlitz 24 in Form einer halben Ellipse vorgesehen. In allen diesen Fällen verlaufen die Schlitze parallel zur Außenkontur des Gassackes und die Gassackabschnitte, die den freigeschnittenen Gassackabschnitten benachbart sind, stellen für diese einen Rahmen dar. Beim Aufprall des Insassen auf den freigeschnittenen Abschnitt des Gassacks wird dieser Abschnitt gewissermaßen aus dem Rahmen gedrückt.

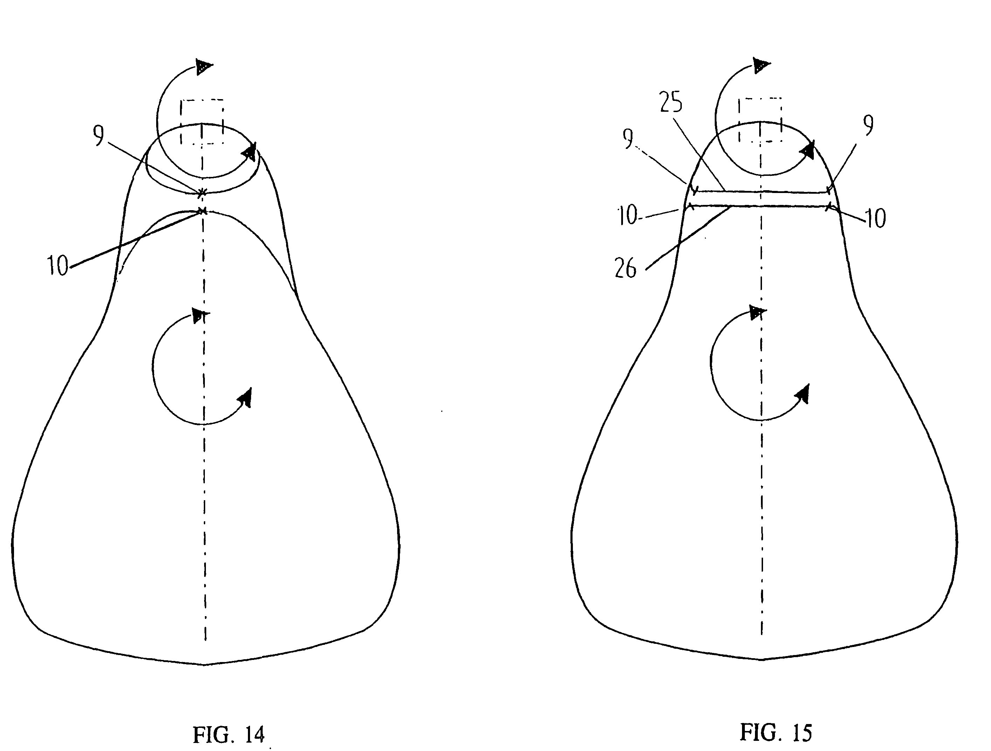

Beim Ausführungsbeispiel der Fig. 14 sind die Schnittkanten 9 bzw. 10 der Ober- und Unterplatte direkt miteinander vernäht. Dadurch wird die Außenkontur bei der Entfaltung des Gassacks gegenüber den übrigen Gassackbeeichen stark nach innen eingezogen. Dagegen sind bei der Ausführungsform der Fig. 15 zwischen den gegenüberliegenden Kanten 9 bzw. 10 Gassackteile 25, 26 so großer Breite eingefügt, daß die Außenkontur im wesentlichen der Außenkontur der übrigen Bereiche des Gassacks entspricht. Zwischen diesen beiden Extremfällen liegt das Ausführugnsbeispiel der Fig. 4, bei dem ein Gasssackteil geringerer Breite zwischen den Schnittkanten eingefügt worden ist.

## Patentansprüche

1. Gassack für ein Airbagmodul,
der mindestens einen freigeschnittenen, unabhängig vom übrigen Gassackbereich beweglichen Gassackabschnitt (8, 13, 16, 17, 18) aufweist, der zumindest teilweise innerhalb der Außenkontur (14) des Gassacks liegt **dadurch gekennzeichnet, daß** der freigeschnittene Gassackabschnitt eine solche Größe und Form aufweist, daß der benachbarte Gassackabschnitt für den freigeschnittenen Gassackabschnitt einen Rahmen darstellt.

2. Gassack nach Anspruch 1, **dadurch gekennzeichnet, daß** der freigeschnittene Gassackabschnitt (8) in dem Gassackbereich vorgesehen ist, der im entfalteten Gassack (5) dem Kopf des Insassen (4) zugeordnet ist.

3. Gassack nach Anspruch 1 oder 2, **dadurch gekennzeichnet, daß** der freigeschnittene Gassackabschnitt (8) im Bereich der Anbindung des Gassacks an einen Gasgenerator (3) liegt.

4. Gassack nach mindestens einem der vorhergehenden Ansprüche, **dadurch gekennzeichnet, daß** mindestens ein Freischnitt (15) schlitzförmig durch gegenüberliegende Seiten (6, 7) des Gassacks (5) verläuft und daß gegenüberliegende Schlitzkanten (9, 10) dieser Seiten miteinander gasdicht verbunden sind.

5. Gassack nach Anspruch 4, **dadurch gekennzeichnet, daß** zwischen den gegenüberliegenden Schlitzkanten (9, 10) der gegenüberliegenden Seiten mindestens ein zusätzliches Gassackteil (11, 25, 26) vorgesehen ist.

6. Gassack nach Anspruch 4 oder 5, **dadurch gekennzeichnet, daß** der Gassack aus einem Ober- und einem Unterteil (6, 7) zusammengesetzt ist und daß beide Teile einen identischen Schlitzverlauf aufweisen.

7. Gassack nach mindestens einem der vorhergehenden Ansprüche 4-6, **dadurch gekennzeichnet, daß** der Schlitz (21 - 24) kurvenförmig oder winkelförmig verläuft.

8. Gassack nach mindestens einem der vorhergehenden Ansprüche 4-7, **dadurch gekennzeichnet, daß** der Schlitz (19) U-förmig verläuft.

9. Gassack nach mindestens einem der vorhergehenden Ansprüche 4-8, **dadurch gekennzeichnet, daß** beide Enden des Schlitzes (21 - 24) innerhalb der Gassackaußenkontur (14) liegen.

10. Gassack nach mindestens einem der vorhergehenden Ansprüche 4-9, **dadurch gekennzeichnet, daß** zwei Schlitze (19, 20) mit ihren Enden im Abstand einander gegenüberliegen.

11. Gassack nach mindestens einem der vorhergehenden Ansprüche 4-10, **dadurch gekennzeichnet, daß** mindestens ein Ende des Schlitzes die Gassackaußenkontur durchdringt.

12. Gassack nach mindestens einem der vorhergehenden Ansprüche 4-11, **dadurch gekennzeichnet, daß** der Verlauf des Schlitzes (21 - 24) zumindest teilweise dem Verlauf der Außenkontur (14) des Gassacks entspricht.

## Claims

1. Gas bag for an airbag module, which has at least one cut-free gas-bag section (8, 13, 16, 17, 18) which is movable independently of the remaining gas-bag region and is situated at least partly within the outer contour (14) of the gas bag, **characterized in that** the cut-free gas-bag section is of such a size and shape that the adjacent gas-bag section constitutes a frame for the cut-free gas-bag section.

2. Gas bag according to Claim 1, **characterized in that** the cut-free gas-bag section (8) is provided **in that** gas-bag region which in the deployed gas bag (5) is assigned to the head of the passenger (4).

3. Gas bag according to Claim 1 or 2, **characterized in that** the cut-free gas-bag section (8) is situated in the region of the connection of the gas bag to a gas generator (3).

4. Gas bag according to at least one of the preceding claims, **characterized in that** at least one cut (15) runs in the form of a slot through opposite sides (6, 7) of the gas bag (5), and **in that** opposite slot edges (9, 10) of these sides are connected to each other in a gas-tight manner.

5. Gas bag according to Claim 4, **characterized in that** between the opposite slot edges (9, 10) of the opposite sides there is provided at least one additional gas-bag part (11, 25, 26).

6. Gas bag according to Claim 4 or 5, **characterized in that** the gas bag is composed of an upper and a lower part (6, 7), and **in that** the two parts have an identical slot profile.

7. Gas bag according to at least one of the preceding Claims 4 to 6, **characterized in that** the slot (21-24) runs in a curved or angular manner.

8. Gas bag according to at least one of the preceding Claims 4 to 7, **characterized in that** the slot (19) runs in the shape of a U.

9. Gas bag according to at least one of the preceding Claims 4 to 8, **characterized in that** the two ends of the slot (21-24) are situated within the gas-bag outer contour (14).

10. Gas bag according to at least one of the preceding Claims 4 to 9, **characterized in that** two slots (19, 20) are situated opposite each other with their ends spaced apart.

11. Gas bag according to at least one of the preceding Claims 4 to 10, **characterized in that** at least one end of the slot penetrates the gas-bag outer contour.

12. Gas bag according to at least one of the preceding Claims 4 to 11, **characterized in that** the profile of the slot (21-24) at least partly corresponds to the profile of the outer contour (14) of the gas bag.

## Revendications

1. Coussin à gaz pour un module d'airbag,
qui présente au moins un tronçon de coussin à gaz (8, 13, 16, 17, 18) librement découpé et mobile indépendamment de la région restante du coussin à gaz, lequel est situé au moins partiellement à l'intérieur du contour extérieur (14) du coussin à gaz, **caractérisé en ce que** le tronçon de coussin à gaz librement découpé présente une taille et une forme telles que le tronçon de coussin à gaz voisin constitue un cadre pour le tronçon de coussin à gaz librement découpé.

2. Coussin à gaz selon la revendication 1, **caractérisé en ce que** le tronçon de coussin à gaz (8) librement découpé est prévu dans la région de coussin à gaz qui est associée à la tête du passager (4) dans le coussin à gaz (5) déployé.

3. Coussin à gaz selon l'une ou l'autre des revendications 1 et 2, **caractérisé en ce que** le tronçon de coussin à gaz (8) librement découpé se trouve dans la région du rattachement du coussin à gaz à un générateur de gaz (3).

4. Coussin à gaz selon au moins l'une des revendications précédentes, **caractérisé en ce qu'**au moins une coupe libre (15) s'étend en forme de fente à travers des côtés (6, 7) opposés du coussin à gaz (5), et **en ce que** des arêtes de fente (9, 10) opposées de ces côtés sont reliées l'une à l'autre de manière étanche aux gaz.

5. Coussin à gaz selon la revendication 4, **caractérisé en ce qu'**au moins une partie de coussin à gaz (11, 25, 26) additionnelle est prévue entre les arêtes de fente (9, 10) opposées des côtés opposés.

6. Coussin à gaz selon l'une ou l'autre des revendications 4 et 5, **caractérisé en ce que** le coussin à gaz est constitué par une partie supérieure (6) et par une partie inférieure (7), et **en ce que** les deux parties présentent un tracé de fente identique.

7. Coussin à gaz selon au moins l'une des revendications 4 à 6, **caractérisé en ce que** la fente (21 - 24) s'étend en courbe ou en angle.

8. Coussin à gaz selon au moins l'une des revendications 4 à 7, **caractérisé en ce que** la fente (19) s'étend en forme de U.

9. Coussin à gaz selon au moins l'une des revendications 4 à 8, **caractérisé en ce que** les deux extrémités de la fente (21 - 24) sont situées à l'intérieur du contour extérieur (14) du coussin à gaz.

10. Coussin à gaz selon au moins l'une des revendications 4 à 9, **caractérisé en ce que** deux fentes (19, 20) sont opposées à distance l'une de l'autre par leurs extrémités.

11. Coussin à gaz selon au moins l'une des revendications 4 à 10, **caractérisé en ce qu'**au moins une extrémité de la fente traverse le contour extérieur du coussin à gaz.

12. Coussin à gaz selon au moins l'une des revendications 4 à 11, **caractérisé en ce que** le tracé de la fente (21 - 24) correspond au moins partiellement au tracé du contour extérieur (14) du coussin à gaz.
